# EUROPEAN PATENT APPLICATION

(11) **EP 3 620 046 A1**
(43) Date of publication of application: **11.03.2020**
(21) Application number: 18193235.1
(22) Date of filing: 07.09.2018
(51) Int. Cl.: A01J 5/007

(54) **METHOD AND CONTROL UNIT FOR CONTROLLING MILK EXTRACTION VIA AN AUTOMATIC MILKING MACHINE**

(71) Applicant: DeLaval Holding AB, 147 21 Tumba (SE)
(72) Inventor: Paulrud, Carl Oskar, 147 21 Tumba (SE)
(74) Representative: Lilliehorn, Tobias

(57) **Abstract**

An automatic milking machine extracts milk from the teats of an animal by applying a milking vacuum to a respective teat receiving cavity (111, 112, 113, 114) each in which one of the teats is located during a milking session (T_{M}). The milking session (T_{M}) includes a boost phase (T_{BOOST}) and is concluded by an exit phase (T_{EXIT}). During the boost phase (T_{BOOST}), the milking vacuum is applied at an elevated pressure level. During the exit phase, the milking vacuum is applied at one or more levels, each of which is lower than the elevated pressure level. The operation of the automatic milking machine transitions from the boost phase (T_{BOOST}) to the exit phase (T_{EXIT}) when (t2) a temporal criterion is fulfilled.

## Description

### TECHNICAL FIELD

The present invention relates generally to automatic milking of dairy animals. More particularly the invention relates to a control unit for a milking system and method of controlling a milking system. The invention also relates to a computer program and a non-volatile data carrier.

### BACKGROUND

As new and more advanced milking equipments are developed, the milking process has become almost completely automated. For efficiency and animal-health reasons, it is important that the milk extraction be optimally controlled throughout a milking session. Due to the wide variety in milk flow characteristics between different animals, and for a particular animal between different milking occasions, it is a far from trivial task to control the milking machine in adequate manner.

There are known solutions for controlling a milking machine based on the flow of extracted milk as a function of time. For example, DE 36 09 275 A1 describes a milk removal method, wherein the flow of milk is detected in at least one teat, and based thereon; a milk-flow profile is derived. The milk-flow profile indicates a temporal dependence of the quantity of milk obtained within individual pulsation cycles. This, in turn, serves as a basis for a vacuum application parameter for a following milking operation.

US 5,090,359 shows a milking apparatus that includes a teatcup with a liner and means for subjecting the interior of the liner to a pressure, which is lower than atmospheric pressure. There are also means for subjecting the pulsation chamber formed between the teat cup and the liner to a pulsating pressure varying between a low pressure and a high pressure. The high pressure is higher than the pressure in the interior of the liner. Further, means are provided for controlling the respective pressures in the liner and the pulsation chamber. A flow-sensing member senses the flow of the milk, which during milking increases to a main flow, then amounts to the main flow, and diminishes from the main flow in a terminating phase of milking. The pressure control means is adapted to control the various pressures in response to the flow sensing member sensing during the terminating milking phase that the milk flow has diminished to a predetermined portion of the main flow, such that the low pressure in the pulsation chamber is higher than the pressure in the liner, at least during a part of the terminating milking phase.

It has been shown, however, that none of the known solutions provides a fully satisfying milking with respect to efficiency and responsiveness to the animals' milk generating process.

### SUMMARY

The object of the present invention is therefore to offer a solution for controlling a milking machine, which is both animal friendly and more efficient in terms of milk yield per unit time.

According to one aspect of the invention, the object is achieved by a control unit for controlling an automatic milking machine to extract milk from the teats of an animal during a milking session by applying a milking vacuum to a respective teat-receiving cavity each in which one of the teats is located. The milking session comprises a boost phase, and the milking session is concluded by an exit phase. The control unit is configured to cause the automatic milking machine to apply the milking vacuum at an elevated pressure level during the boost phase. During the exit phase, the control unit is configured to cause the automatic milking machine to apply the milking vacuum at one or more levels, which each is lower than the elevated pressure level. The elevated pressure level during the boost phase is in the range of 48 to 55 kPa, preferably in the range of 50 to 52 kPa.

Specifically, the control unit is configured to cause the automatic milking machine to transition from the boost phase to the exit phase when a temporal criterion is fulfilled.

This control unit is advantageous because determining the extension of the boost phase based on a temporal criterion enables application of the milking vacuum at a higher pressure level than for example a real-time milk-flow based control does, say 48 to 55 kPa as opposed to 42 kPa. Typically, however, according to the invention, the elevated pressure level is applied for a shorter period of time than the extension of a typical main flow phase of the prior-art solutions; say for 50 to 100 seconds instead of around 250 seconds.

According to one embodiment of this aspect of the invention, the control unit has a processing unit that is configured to calculate a condition for fulfilling the temporal criterion based on one or more previous milking sessions. For example, the condition for fulfilling the temporal criterion may be derived from a set of milk flow profiles of a livestock to which the animal belongs. Alternatively or additionally, the temporal criterion may be based on one or more milk flow profiles for the specific animal that have been registered during previous milking sessions for the animal in question. In both cases, a highly suitable point in time can thereby be identified for transitioning to the exiting phase.

Consequently, according to one embodiment of this aspect of the invention, the control unit is configured to control registering of data reflecting at least one milk flow as a function of time during the milking session. The registered data represent either a respective individual milk flow profile of each of the animal's teats, or an overall milk flow profile of the animal's udder. The control unit is configured to store the registered data in a memory unit. Consequently, a solid base is built up for the control of future milking sessions.

Preferably, the control unit is communicatively connected to a memory unit. The processing unit is configured to retrieve, from the memory unit, data reflecting respective individual milk flow profiles of each of the animal's teats. The data have been registered during at least one previous milking session, and each of the individual milk flow profiles represents a respective milk flow as a function of time. The processing unit is further configured to calculate the condition for fulfilling the temporal criterion based on said individual milk flow profiles. This allows the transition time to be determined very accurately.

As an alternative, the processing unit is configured to retrieve, from the memory unit, data reflecting an overall milk flow profile from the animal's udder, which data have been registered during at least one previous milking session. The overall milk flow profile represents a combined milk flow from all the animal's teats as a function of time. The processing unit is further configured to calculate the condition for fulfilling the temporal criterion based on said overall milk flow profile. This renders the data collection relatively straightforward. The transition time may also be determined with good accuracy.

According to another embodiment of this aspect of the invention, the processing unit is configured to calculate the temporal criterion such that this criterion is fulfilled when a particular fraction, e.g. 50 %, of an expected total milk yield has been extracted since the milking session was initiated. Hence, the criterion for transitioning to the exit phase becomes stable and reliable.

Alternatively, the processing unit is configured to calculate the temporal criterion such that this criterion is fulfilled when a period of time has elapsed since an estimated incline stage in the milk flow occurred. The estimated incline stage in the milk flow, in turn, is derived by the processing unit based on data registered during at least one previous milking session. The registered data describe at least one milk flow profile representing a milk flow as a function of time. Thus, another reliable temporal criterion for transitioning to the exit phase is obtained.

According to still another embodiment of this aspect of the invention, the control unit is configured to control the automatic milking machine to perform at least one action for stimulating the production of Oxytocin in the animal during initiating phase proceeding the boost phase. Preferably, said stimulation involves causing some kind of tactile stimuli by: applying the milking vacuum at an initial level while the teats are located in the teat receiving cavities, which initial level is lower than the elevated pressure level; subjecting the teats to a cleaning procedure and/ or scrubbing the teats with at least one brush.

According to embodiments of this aspect of the invention, the control unit is configured to control the milking machine to either apply the milking vacuum at one fixed level throughout the entire exit phase, or adjust the level of the milking vacuum in response to at least one measured milk flow.

According to another embodiment of this aspect of the invention, the control unit is configured to control the automatic milking machine to stop the milking session in response to fulfillment of an end criterion during the exit phase.

According to another aspect of the invention, the object is achieved by a method implemented in a control unit for controlling an automatic milking machine to extract milk from the teats of an animal during a milking session by applying a milking vacuum to a respective teat receiving cavity in which each one of the teats is located. The milking session contains an initiating phase, which is followed by a boost phase and concluded by an exit phase. The method involves applying the milking vacuum at an elevated pressure level during the boost phase. Then, during the exit phase, the milking vacuum is applied at one or more levels, which each is lower than the elevated pressure level. The procedure transitions from the boost phase to the exit phase when a temporal criterion is fulfilled. The advantages of this method, as well as the preferred embodiments thereof, are apparent from the discussion above with reference to the control unit.

According to a further aspect of the invention, the object is achieved by a computer program loadable into a non-volatile data carrier communicatively connected to a processing unit. The computer program includes software for executing the above method when the program is run on the processing unit.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a first embodiment of the invention, wherein the control unit controls an automatic milking machine in milking-cluster operation;
- Figure 2: shows a second embodiment of the invention, wherein the control unit controls an automatic milking machine in quarter-milking operation;
- Figure 3a: shows a diagram exemplifying a milk flow profile of an animal;
- Figure 3b: shows a diagram illustrating how a corresponding milking vacuum is varied over time;
- Figure 4: shows an example of an udder-milk-flow profile for an animal;
- Figures 5a-d: exemplify milk flow profiles of the individual teats corresponding to the milk flow profile in Figure 4;
- Figure 6: illustrates, by means of a flow diagram, a method according to one preferred embodiment of the invention.

### DETAILED DESCRIPTION

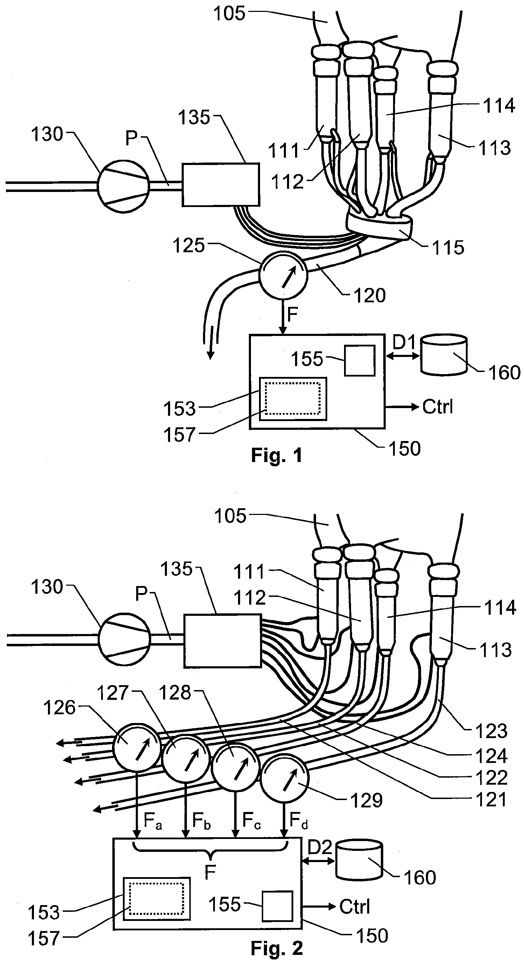

Figure 1 shows a milking cluster for udder milking, i.e. wherein milk is extracted jointly from all the teats of an animal's udder 105 based on variations in a pressure common to all teats. Here, a pulsator controller 135 is arranged to control a pulsator vacuum from a vacuum pump 130 to be applied repeatedly to pulsation chambers formed between each teatcup and its respective liner therein. The milking claw 115 is connected to teat receiving cavities in the form of a set of four teatcups 111, 112, 113 and 114 via respective milk hoses. The teatcups 111, 112, 113 and 114, in turn, are attached to a respective teat of the udder 105. The pulsator controller 135 is configured to apply the pulsator vacuum to all the four teatcups 111, 112, 113 and 114 while a milking vacuum prevails in the milk hoses. Milk is extracted from the udder 105, withdrawn by the milking vacuum, collected in the milking claw 115 and forwarded through a milk conduit 120. A flow meter 125 registers a parameter representing a measured milk flow F in the milk conduit 120. The measured milk flow F may be registered either continuously or repeatedly at discrete time instances. In any case, the parameter representing the measured milk flow F is forwarded to a control unit 150.

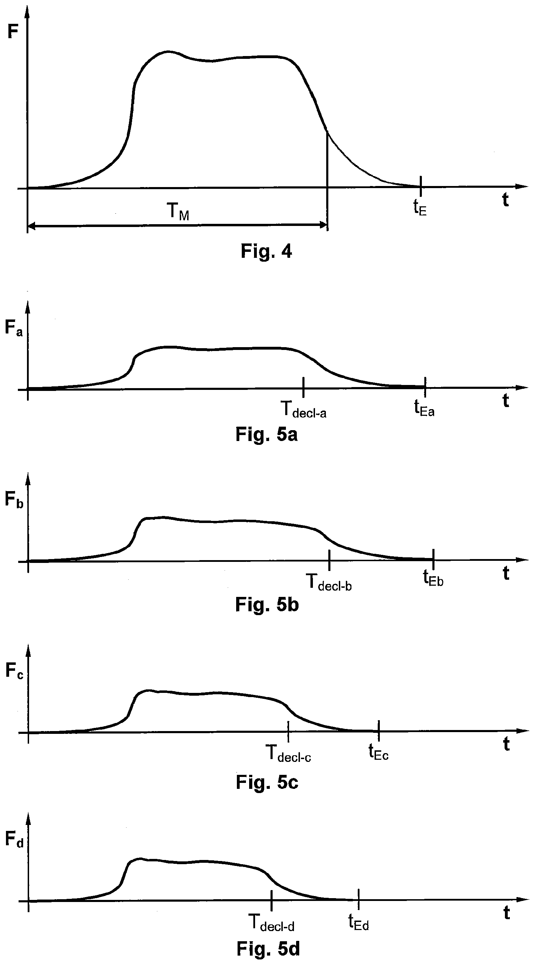

According to one embodiment of the invention, the control unit 150 is configured to control registering of data D1, which reflect the milk flow F as a function of time t during a milking session T_{M}. Figure 4 shows one such example, i.e. a so-called milk flow profile. Typically, the milk flow profile has as an incline stage during which the milk flow increases, a plateau stage during which the milk flow is relatively constant, and a decline stage during which the milk flow would finally decrease down to a minimal level at some point in time t_{E}, i.e. the animal's milk secretion rate. However, due to inter alia animal-health and efficiency reasons, the milking never continues until t_{E}. Instead, the milking session T_{M} ends at an appropriate earlier point in time. In Figure 1, the registered data D1 represent an overall milk flow profile of the animal's udder 105, such as the one illustrated in Figure 4. The control unit 150 is further configured to control the storing of the registered data D1 in a memory unit 160.

According to the invention, the control unit 150 generally controls an automatic milking machine to extract milk from the teats of an animal during a milking session by applying a milking vacuum P to extract milk via the teat receiving cavities 111, 112, 113 and 114 respectively each in which one of the animal's teats is located. In Figures 1 and 2, this functionality is symbolized by a signal Ctrl from the control unit 150.

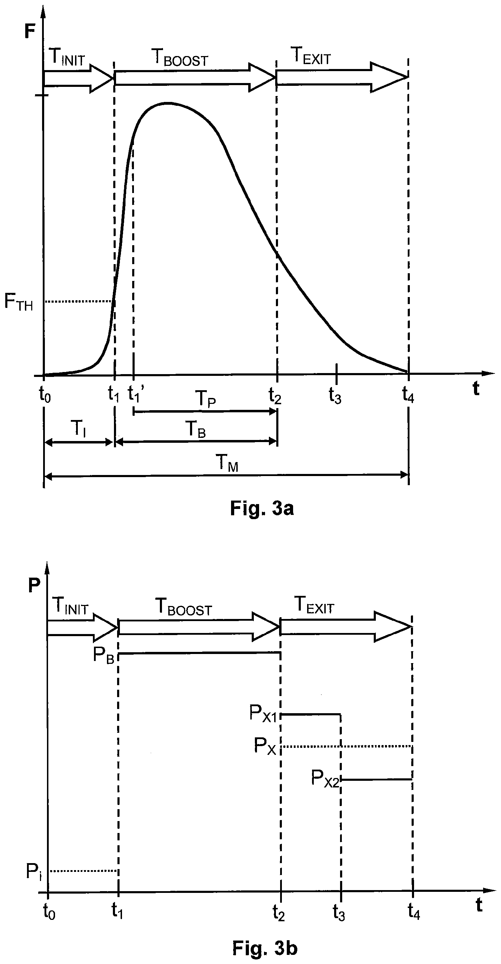

Referring now to Figure 3a, we see another example of a milk flow F as a function of time t during a milking session T_{M}. The milking session T_{M} may contain an initiating phase T_{INIT}, during which for example various actions are performed to stimulate the production of Oxytocin in the animal. In any case, the milking session T_{M} contains a boost phase T_{BOOST} (following the initiating phase T_{INIT} if any), and the milking session T_{M} is concluded by an exit phase T_{EXIT}.

The control unit 150 is specifically configured to cause the automatic milking machine to apply the milking vacuum P at an elevated pressure level P_{B} during the boost phase T_{BOOST}. This is illustrated in Figure 3b. Compared to a typical prior-art main phase vacuum pressure level, the elevated pressure level P_{B} is relatively high. The elevated pressure level P_{B} may be in the order of 48 kPa to 52 kPa, whereas in the prior-art, the main phase vacuum pressure level normally lies around 42 kPa. The inventor has found that the elevated pressure level P_{B} better matches the animal's initial high delivery of milk when the alveoli production is in full progress. On the other hand, as will be explained below, the boost phase T_{BOOST} is usually shorter than the duration of the typical main phase vacuum pressure level according to the prior art.

During the exit phase T_{EXIT}, the control unit 150 is configured to apply the milking vacuum P at one or more levels, here exemplified by P_{X} or P_{X1} and P_{X2} respectively, which each is lower than the elevated pressure level P_{B}. The control unit 150 is specifically configured to cause the automatic milking machine to transition from the boost phase T_{BOOST} to the exit phase T_{EXIT} when a temporal criterion is fulfilled.

For illustration purposes, the example represented in Figure 3a shows the optional initiating phase T_{INIT}. This phase T_{INIT} of the milking session T_{M} starts at to; and at t₁, the boost phase T_{BOOST} begins. Then, at t₂, we assume that the temporal criterion is fulfilled, and therefore the procedure transitions to the exit phase T_{EXIT}. Finally, at t₄, the exit phase T_{EXIT} ends and the milking session T_{M} stops.

If the milking session T_{M} includes the initiating phase T_{INIT}, the operation of the milking machine preferably involves transitioning from the initiating phase T_{INIT} to the boost phase T_{BOOST} at the expiry of a time period T_{I} since the milking session T_{M} started, say 30 to 60 seconds later. Alternatively, the initiating phase T_{INIT} may transition into the boost phase T_{BOOST} at in response to registering a milk flow F above a threshold level F_{TH}, i.e. an indicator of that the alveoli milk production is in progress.

The horizontal axis of the diagram in Figure 3a represents time t, and the vertical axis represents the registered milk flow F as a function of time t. Similarly, in Figure 3b, the horizontal axis represents time t and the vertical axis represents the milking pressure P.

Preferably, the control unit 150 contains a processing unit 155 in order to calculate a condition for fulfilling the temporal criterion. The condition is calculated based on one or more previous milking sessions T_{M}.

To enable such calculations, according to one embodiment of the invention, the control unit 150 is communicatively connected to a memory unit 160. The processing unit 155 is further configured to retrieve data D1 from the memory unit 160, which data D1 reflect an overall milk flow profile from the animal's udder 105, and which data D1 have been registered during at least one previous milking session T_{M}. The overall milk flow profile represents a combined milk flow F from all the animal's teats as a function of time t, i.e. milk-flow measurements that have registered in a setup illustrated in Figure 1.

Referring now to Figure 2, we see a quarter-milking setup, i.e. wherein milk is extracted individually from each of the animal's teats based on separate pressure variations in each teat receiving cavity. Thus, here, the pulsator controller 135 is arranged to control a pulsator vacuum from the vacuum pump 130 to be individually applied repeatedly to each pulsation chamber formed between each teatcup and its respective liner therein. Teat receiving cavities in the form of a set of four teatcups 111, 112, 113 and 114 are connected to a respective milk conduit 121, 122, 123 and 124. The teatcups 111, 112, 113 and 114 are further attached to a respective teat of the udder 105. Milk is extracted from the udder 105, withdrawn by the milking vacuum, and forwarded through the milk conduits 121, 122, 123 and 124. Flow meters 126, 127, 128 and 129 register parameters representing a respective measured milk flow Fₐ, F_{b}, F_{c} and F_{d} in the milk conduits 121, 122, 123 and 124 respectively from each of the teatcups 111, 112, 113 and 114. The measured milk flows Fₐ, F_{b}, F_{c} and F_{d} may be registered either continuously or repeatedly at discrete time instances. In any case, the registered parameters representing the measured milk flows Fₐ, F_{b}, F_{c} and F_{d} are forwarded to the control unit 150, and further fed to the memory unit 160 for storage as data D2.

Figures 5a, 5b, 5c and 5d illustrate examples of the individual milk flow profiles of the teats in the animal's udder 105 registered via the milk flows Fₐ, F_{b}, F_{c} and F_{d} respectively. This means that, if added together, the milk flow profiles in Figures 5a, 5b, 5c and 5d would result in the milk flow profile of Figure 4. As can be seen in this example, for two of the teats, the plateau stage is somewhat longer. In other words, the decline stage begins later, at T_{decl-a} and T_{decl-b} respectively, than for the other two teats, where the decline stage begins at T_{decl-c} and T_{decl-d} respectively. This is because the alveoli connected to the former teats contain more milk, and thus contributes more to the overall milk yield. The corresponding theoretical end points time t_{Ea} and t_{Eb} respectively also occur later for the former teats than for the latter ditto t_{Ec} and t_{Ed} respectively. Of course, detail knowledge about the teats' individual milk flow profile is therefore useful when calculating the temporal condition for transitioning from the boost phase T_{BOOST} into the exit phase T_{EXIT}.

Depending on whether the retrieved data D1 or D2 reflect an overall milk flow profile or respective individual milk flow profiles of each of the animal's teats, the processing unit 155 is configured to either calculate the condition for fulfilling the temporal criterion based on the overall milk flow profile or the individual milk flow profiles. In any case, in the light of the historic data provided by the at least one previously registered milk flow profile, the processing unit 155 sets a point in time t₂ when the boost phase T_{BOOST} shall transition into the exit phase T_{EXIT}. For example, this may occur a time T_{B} after a point in time t₁ when the boost phase T_{BOOST} began. Alternatively, the boost phase T_{BOOST} may transition into the exit phase T_{EXIT} a period of time T_{P} has elapsed since t'₁ an estimated incline stage in the milk flow F occurred. In other words, the temporal criterion is calculated such that the temporal criterion is fulfilled when the period of time T_{P} has elapsed since the point in time t'₁. The processing unit 155 is configured to derive the estimated incline stage in the milk flow F based on data D1 or D2 respectively registered during at least one previous milking session T_{M}.

As yet another alternative, the processing unit 150 may be configured to calculate the temporal criterion such that the temporal criterion is fulfilled when a particular fraction of an expected total milk yield has been extracted since the milking session T_{M} was initiated t₀. In this case, the expected total milk yield is also estimated based on one or more milk flow profiles registered during at least one previous milking session. At a point in time t₂ when 50 % of the expected total milk yield have been extracted may be appropriate to end the boost phase T_{BOOST}. However, according to the invention, any other fraction is equally well conceivable as a set point for the temporal criterion.

Irrespective of on which basis the temporal criterion is set, the boost phase T_{BOOST}, according to embodiments of the invention, the boost phase T_{BOOST} ideally has an extension in time T_{B} of around 50 to 100 seconds.

As mentioned above, and as is apparent from Figures 3a and 3b, the boost phase T_{BOOST} may be preceded by an initiating phase T_{INIT}. In Figure 3a, this phase extends from t₀ to t₁. According to one embodiment of the invention, the control unit 150 is configured to control the automatic milking machine to perform at least one action for stimulating the production of Oxytocin in the animal to be milked.

Oxytocin is a peptide hormone and neuropeptide, which is released into the bloodstream in response to inter alia tactile stimulation of the teats. Among other things Oxytocin assists in instigating the lactation process. Therefore, the control unit 150 is preferably configured to control the automatic milking machine to apply the milking vacuum P at an initial pressure level Pᵢ while the teats are located in the teat receiving cavities 111, 112, 113 and 114 respectively. Namely, this results in tactile stimulation of the teats. The initial pressure level Pᵢ is relatively low, and clearly lower than the elevated pressure level P_{B}.

Alternatively, or additionally, the control unit 150 is configured to control the automatic milking machine to subject the teats to a cleaning procedure. Preferably, the cleaning procedure is effected by supplying cleaning and rinsing fluids to the teat receiving cavities 111, 112, 113 and 114. However, according to one embodiment of the invention, the control unit 150 is configured to control the cleaning procedure such that at least one dedicated cleaning cup is used which is different from the teat receiving cavities 111, 112, 113 and 114 used for extracting milk from the teats.

Alternatively, or additionally, the control unit 150 is configured to control the automatic milking machine to scrub the animal's teats with one or more brushes to accomplish the desired tactile stimulation.

The control unit 150 is preferably configured to control the milking machine throughout the entire milking session T_{M}. According to one embodiment of the invention, this means that, during the exit phase T_{EXIT}, the control unit 150 controls the milking machine to apply the milking vacuum P at one fixed level Px throughout the exit phase T_{EXIT}. Alternatively, the control unit 150 controls the milking machine to adjust the level of the milking vacuum P during the exit phase T_{EXIT} in response to at least one measured milk flow, for example F and Fₐ, F_{b}, F_{c}, and F_{d} respectively in Figures 1 and 2. Figure 3b exemplifies two such differently adjusted pressure levels in the form of F_{X1} and F_{X2}. During the exit phase T_{EXIT}, the control unit 150 sets the milking vacuum P to a level that is adapted to the somewhat lower milk production in the later stages of the milking session T_{M}. Thus, in the exit phase T_{EXIT}, the milking vacuum P is lower than in the boost phase T_{BOOST}.

Preferably, the control unit 150 is further configured to control the automatic milking machine throughout the exit phase T_{EXIT}, and thus cause the milking session T_{M} to stop in response to fulfillment of an end criterion.

It is generally advantageous if the above-described control unit 150 is configured to effect the above-mentioned procedure in an automatic manner by executing a computer program 157. Therefore, the control unit 150 may include a memory unit, i.e. non-volatile data carrier 153, storing the computer program 157, which, in turn, contains software for making processing circuitry in the form of at least one processor in the control unit 150 execute the above-described actions when the computer program 157 is run on the at least one processor.

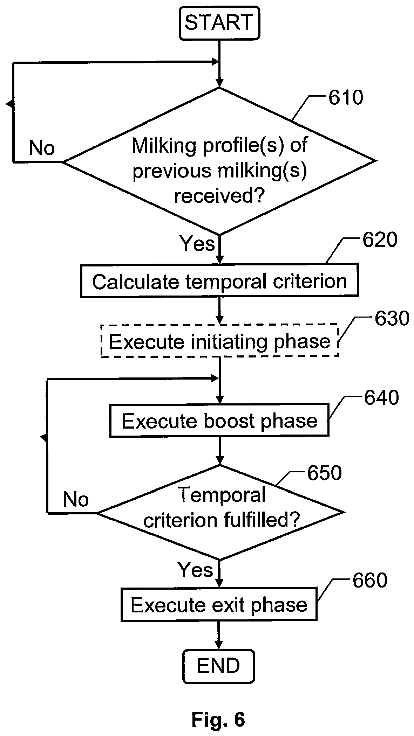

In order to sum up, and with reference to the flow diagram in Figure 6, we will now describe one preferred embodiment of the method according to the invention for controlling an automatic milking machine to extract milk from the teats of an animal during a milking session by applying a milking vacuum to a respective teat receiving cavity each in which the teats are located.

In a first step 610, it is checked if the milk flow profile from at least one previous milking session is available; and if so, a step 620 follows. Otherwise, the procedure loops back and stays in step 610.

In step 620 a temporal criterion is calculated, which temporal criterion determines when the operation of the milking machine shall transition from the boost phase to the exit phase. Thereafter, the milking session starts, either in a step 630, which is optional; or in a step 640. Step 630 involves executing an initiating phase to stimulate the production of Oxytocin in the animal to be milked.

The boost phase follows in a step 640, either directly after step 620, or after step 630. Here, the milking vacuum is applied at an elevated pressure level.

Subsequently, a step 650 checks if the temporal criterion is fulfilled. If so, a step 660 follows; and otherwise, the procedure loops back to step 640 for continued execution of the boost phase. In step 660, the exit phase is executed, and thereafter the procedure ends. During the exit phase, the milking vacuum is applied at one or more levels, which each is lower than the elevated pressure level.

All of the process steps, as well as any sub-sequence of steps, described with reference to Figure 6 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A method implemented in a control unit for controlling an automatic milking machine to extract milk from the teats of an animal during a milking session (T_{M}) by applying a milking vacuum (P) to a respective teat receiving cavity (111, 112, 113, 114) each in which one teat of said teats is located, the milking session (T_{M}) comprising a boost phase (TBOOST) and being concluded by an exit phase (T_{EXIT}), the method comprising:
applying the milking vacuum (P) at an elevated pressure level (P_{B}) during the boost phase (T_{BOOST}); and
applying the milking vacuum (P) at one or more levels (P_{X}; P_{X1}, P_{X2}) during the exit phase, which one or more levels (P_{X}; P_{X1}, P_{X2}) each is lower than the elevated pressure level (P_{B}), **characterized by**
transitioning from the boost phase (T_{BOOST}) to the exit phase (T_{EXIT}) when (t₂) a temporal criterion is fulfilled.

2. The method according to claim 1, comprising calculating a condition for fulfilling the temporal criterion based on data (D1; D2) registered during one or more previous milking sessions (T_{M}).

3. The method according to claim 2, comprising:
retrieving, from a memory unit (160), data (D2) reflecting respective individual milk flow profiles of each of the animal's teats, which data (D2) have been registered during at least one previous milking session (T_{M}), each of said individual milk flow profiles representing a respective milk flow (Fₐ, F_{b}, F_{c}, F_{d}) as a function of time (t); and
calculating the condition for fulfilling the temporal criterion based on said individual milk flow profiles.

4. The method according to claim 2, wherein the calculating of the condition for fulfilling the temporal criterion comprises:
retrieving, from a memory unit (160), data (D1) reflecting an overall milk flow profile from the animal's udder, which data (D1) have been registered during at least one previous milking session (T_{M}), said overall milk flow profile representing a combined milk flow (F) from all the animal's teats as a function of time (t); and
calculating the condition for fulfilling the temporal criterion based on said overall milk flow profile.

5. The method according to any one of the preceding claims, wherein the temporal criterion is calculated such that the temporal criterion is fulfilled when a particular fraction of an expected total milk yield has been extracted since the milking session (T_{M}) was initiated (t₀).

6. The method according to any one of the claims 1 to 4, wherein the temporal criterion is calculated such that the temporal criterion is fulfilled when a period of time (T_{P}) has elapsed since an estimated incline stage (t'₁) in the milk flow (F) occurred, and the method comprises:
deriving the estimated incline stage in the milk flow (F) based on data (D1; D2) registered during at least one previous milking session (T_{M}), which data (D1; D2) describe at least one milk flow profile representing a milk flow (F) as a function of time (t).

7. The method according to any one of the preceding claims, comprising an initiating phase (T_{INIT}) proceeding the boost phase (TBOOST) during which initiating phase (T_{INIT}) at least one action is performed for stimulating the production of Oxytocin in the animal.

8. The method according to claim 7, wherein the at least one action for stimulating the production of Oxytocin in the animal comprises at least one of:
applying the milking vacuum (P) at an initial pressure level (Pᵢ) while the teats are located in the teat receiving cavities, which initial pressure level (Pᵢ) is lower than the elevated pressure level (P_{B});
subjecting the teats to a cleaning procedure; and
scrubbing the teats with at least one brush.

9. The method according to claim 8, wherein the cleaning procedure involves using at least one dedicated cleaning cup which is different from the teat receiving cavities (111, 112, 113, 114) used for extracting milk from the teats.

10. The method according to any one of the claims 7 to 9, comprising transitioning from the initiating phase (T_{INIT}) to the boost phase (T_{BOOST}) in response to at least one of:
expiry of a time period (Tᵢ) since the milking session started, and
registering a milk flow (F) above a threshold level (F_{TH}).

11. The method according to any one of the preceding claims, comprising applying the milking vacuum (P) at one fixed level (P_{X}) throughout the exit phase (T_{EXIT}).

12. The method according to any one of the claims 1 to 10, comprising adjusting the level (F_{X1}, F_{X2}) of the milking vacuum (P) during the exit phase (T_{EXIT}) in response to at least one measured milk flow (F; Fₐ, F_{b}, F_{c}, F_{d}).

13. The method according to any one of the preceding claims, comprising stopping the milking session (T_{M}) in response to an end criterion being fulfilled during the exit phase (T_{EXIT}).

14. The method according to any one of the preceding claims, comprising:
registering, during the milking session (T_{M}), data (D1, D2) reflecting at least one milk flow (F; Fₐ, F_{b}, F_{c}, F_{d}) as a function of time (t), the registered data (D1; D2) representing either a respective individual milk flow profile of each of the animal's teats, or an overall milk flow profile of the animal's udder; and
storing the registered data in a memory unit (160).

15. A computer program (157) loadable into a non-volatile data carrier (153) communicatively connected to a control unit (150), the computer program (157) comprising software for executing the method according any of the claims 1 to 13 when the computer program (157) is run on a processing unit (155) in the control unit (150).

16. A non-volatile data carrier (153) containing the computer program (157) of the claim 15.

17. A control unit (150) for controlling an automatic milking machine to extract milk from the teats of an animal during milking session (T_{M}) by applying a milking vacuum (P) to a respective teat receiving cavity (111, 112, 113, 114) in which one of said teats is located, the milking session (T_{M}) comprising a boost phase (TBOOST) and being concluded by an exit phase (T_{EXIT}), and the control unit (150) being configured to cause the automatic milking machine to:
apply the milking vacuum (P) at an elevated pressure level (PB) during the boost phase (TBOOST), and
apply the milking vacuum (P) at one or more pressure levels (P_{X}; P_{X1}, P_{X2}) during the exit phase (T_{EXIT}), which one or more pressure levels (P_{X}; P_{X1}, P_{X2}) each is lower than the elevated pressure level (P_{B}),
**characterized in that** the control unit (150) is further configured to cause the automatic milking machine to transition from the boost phase (T_{BOOST}) to the exit phase (T_{EXIT}) when (t₂) a temporal criterion is fulfilled.

18. The control unit (150) according to claim 17, comprising a processing unit (155) configured to calculate a condition for fulfilling the temporal criterion based on one or more previous milking sessions (T_{M}).

19. The control unit (150) according to claim 18, wherein the control unit (150) is communicatively connected to a memory unit (160), and the processing unit (155) is configured to:
retrieve, from the memory unit (160), data (D2) reflecting respective individual milk flow profiles of each of the animal's teats, which data (D2) have been registered during at least one previous milking session (T_{M}), each of said individual milk flow profiles representing a respective milk flow (Fₐ, F_{b}, F_{c}, F_{d}) as a function of time (t); and
calculate the condition for fulfilling the temporal criterion based on said individual milk flow profiles.

20. The control unit (150) according to claim 18, wherein the control unit (150) is communicatively connected to a memory unit (160), and the processing unit (155) is configured to:
retrieve, from the memory unit (160), data (D1) reflecting an overall milk flow profile from the animal's udder, which data (D1) have been registered during at least one previous milking session (T_{M}), said overall milk flow profile representing a combined milk flow (F) from all the animal's teats as a function of time (t); and
calculate the condition for fulfilling the temporal criterion based on said overall milk flow profile.

21. The control unit (150) according to any one of the claims 17 to 20, wherein the processing unit (150) is configured to calculate the temporal criterion such that the temporal criterion is fulfilled when a particular fraction of an expected total milk yield has been extracted since the milking session (T_{M}) was initiated (t₀).

22. The control unit (150) according to any one of the claims 17 to 20, the processing unit (150) is configured to:
calculate the temporal criterion such that the temporal criterion is fulfilled when a period of time (T_{P}) has elapsed since an estimated incline stage (t'₁) in the milk flow (F) occurred; and
derive the estimated incline stage in the milk flow (F) based on data (D1; D2) registered during at least one previous milking session (T_{M}), which data (D1; D2) describe at least one milk flow profile representing a milk flow (F) as a function of time (t).

23. The control unit (150) according to any one of the claims 17 to 22, wherein the control unit (150) is configured to control the automatic milking machine to perform at least one action for stimulating the production of Oxytocin in the animal by at least one of:
applying the milking vacuum (P) at an initial level (Pᵢ) while the teats are located in the teat receiving cavities, which initial level (Pᵢ) is lower than the elevated pressure level (P_{B});
subjecting the teats to a cleaning procedure; and
scrubbing the teats with at least one brush.

24. The control unit (150) according to claim 23, wherein the control unit (150) is configured to control the cleaning procedure such that at least one dedicated cleaning cup is used which is different from the teat receiving cavities (111, 112, 113, 114) used for extracting milk from the teats.

25. The control unit (150) according to any one of the claims 17 to 24, wherein the control unit (150) is configured to control the milking machine to apply the milking vacuum (P) at one fixed level (P_{X}) throughout the exit phase (T_{EXIT}).

26. The control unit (150) according to any one of the claims 17 to 24, wherein the control unit (150) is configured to adjust the level (F_{X1}, F_{X2}) of the milking vacuum (P) during the exit phase (T_{EXIT}) in response to at least one measured milk flow (F; Fₐ, F_{b}, F_{c}, F_{d}).

27. The control unit (150) according to any one of the claims 17 to 26, wherein the control unit (150) is configured to control the automatic milking machine to stop the milking session (T_{M}) in response to an end criterion being fulfilled during the exit phase (T_{EXIT}).

28. The control unit (150) according to any one of the claims 17 to 27, wherein the control unit (150) is configured to control:
registering, during the milking session (T_{M}), of data (D1, D2) reflecting at least one milk flow (F; Fₐ, F_{b}, F_{c}, F_{d}) as a function of time (t), the registered data (D1; D2) representing either a respective individual milk flow profile of each of the animal's teats, or an overall milk flow profile of the animal's udder; and
storing the registered data (D1, D2) in a memory unit (160).
